# EUROPÄISCHE PATENTSCHRIFT

(11) **EP 0 438 646 B1**
(45) Veröffentlichungstag und Bekanntmachung des Hinweises auf die Patenterteilung: **01.03.1995**
(21) Anmeldenummer: 90121238.1
(22) Anmeldetag: 07.11.1990
(51) Int. Cl.: G02B 5/28, B60R 1/08

(54) **Rückblickspiegel für Fahrzeuge, insbesondere Kraftfahrzeuge**
Rearview mirror for vehicles, specially for automotive vehicles
Rétroviseur pour véhicules, en particulier pour véhicules automobiles

(30) Priorität: 19.12.1989 DE 3941859
(43) Veröffentlichungstag der Anmeldung: 31.07.1991
(73) Patentinhaber: DEUTSCHE SPEZIALGLAS AG, 31073 Grünenplan (DE)
(72) Erfinder: Pein, Andreas, W-3220 Alfeld (DE)

(56) Entgegenhaltungen:
- EP-A- 0 176 935
- DE-A- 3 731 501
- DE-A- 3 744 312
- FR-A- 2 635 530
- PATENT ABSTRACTS OF JAPAN, Band 10, Nr. 74 (P-439)[2131], 25. März 1986 ; & JP-A-60 212 704
- PATENT ABSTRACTS OF JAPAN, Band 9, Nr. 96 (C-278)[1819], 25. April 1985 ; & JP-A-59 227 743

## Beschreibung

Die Erfindung betrifft einen Rückblickspiegel für Fahrzeuge, insbesondere Kraftfahrzeuge, nach dem Oberbegriff des Patentanspruchs 1.

Als Reflexionsschicht für derartige Rückblickspiegel eignen sich bekanntlich vor allem solche Beschichtungen, deren Gesamtreflexion nicht allzu hoch ist, entsprechend einer EG-Richtlinie aber mindestens 40 % beträgt, und die außerdem einen deutlichen blauen Reflexionsfarbton aufweisen. Derartige Reflexionsschichten besitzen nämlich blendmindernde Eigenschaften, zum einen wegen der ohnehin z.B. gegenüber Silber oder Aluminium verringerten Gesamtreflexion, zum anderen aber auch wegen der Tatsache, daß das Scheinwerferlicht aufgrund seiner eher niedrigen Farbtemperatur ein in den gelben Bereich verschobenes Emissionsspektrum aufweist, das von einer solchen Beschichtung weniger stark reflektiert wird als Tageslicht. Derartige Beschichtungen können sowohl auf der Vorderfläche als auch auf der Rückseite eines transparenten Schichtträgers aufgetragen sein, der meist aus Natronsilikatglas besteht.

So sind vorderflächig beschichtete Rückblickspiegel bekannt, deren Reflexionsschicht aus drei dielektrischen Einzelschichten von jeweils etwa λ/4-Dicke besteht (λca. 450 nm), wobei die äußeren beiden Schichten einen hohen Brechungsindex aufweisen, die mittlere Schicht einen niedrigen. Wegen der Lichttransmission dielektrischer Schichten ist die Rückfläche eines solchen Spiegels meist noch mit einem dunklen, absorbierenden Überzug versehen (DE-AS 1036672, DE-AS 2449763).

Weiterhin sind Vorderflächenspiegel bekannt, die außer einer dem Substrat direkt aufliegenden metallischen Schicht mit 55 bis 85 % Gesamtreflexion zusätzlich noch eine dielektrische Schicht mit hohem Brechungsindex und etwa λ /2-Dicke besitzen (λca. 450 nm). Durch eine solche zusätzliche lnterferenzschicht wird der ursprünglich neutrale Reflexionsfarbton der metallischen Schicht in einen blauen umgewandelt. Da die metallische Schicht auf der Vorderfläche weitgehend lichtundurchlässig ist, kann bei einem solchen Spiegel auf den oben erwähnten rückflächigen dunklen Überzug verzichtet werden (DE-OS 37 28 100).

Derartige Vorderflächenspiegel haben bekanntlich den Vorteil einer absolut doppelbildfreien Reflexion, weisen aber gleichzeitig den Nachteil auf, daß die meist nur wenige hundert nm dünne Reflexionsbeschichtung äußeren mechanischen und chemischen Angriffen ungeschützt ausgesetzt ist. Dadurch tritt oft ein vorzeitiger Verschleiß ein, und die Spiegel werden unbrauchbar.

Andererseits sind auch rückflächig beschichtete Rückblickspiegel mit blauem Reflexionsfarbton bekannt, und zwar in Form dreier unterschiedlicher Beschichtungstypen:

Beim ersten Typ befindet sich direkt auf der Substratrückfläche eine dielektrische Schicht mit hohem Brechungsindex und etwa λ /2-Dicke (λ ca. 450 nm). Danach folgt eine metallische Schicht mit 60 bis 80 % Gesamtreflexion und anschließend ggf. noch eine Schutzschicht. Ebenso wie bei dem zuvor beschriebenen Vorderflächenspiegel wird auch hier der ursprünglich neutrale Reflexionsfarbton der metallischen Schicht durch eine zusätzliche lnterferenzschicht in einen blauen umgewandelt. Beim Rückflächenspiegel grenzt allerdings die λ /2-Schicht an das Substratglas und nicht an Luft wie beim zuvor beschriebenen Vorderflächenspiegel. Dadurch verliert diese Grenzfläche an optischer Werksamkeit, so daß ein solcher Rückflächenspiegel nur einen relativ schwachen blauen Reflexionsfarbton aufweist. Dieser kommt außerdem lediglich durch eine Verringerung der Reflexion im langwelligen sichtbaren Spektralbereich zustande. Daher nimmt die Gesamtreflexion eines solchen Rückflächenspiegels beim Einstellen eines blauen Reflexionsfarbtons deutlich ab, so daß die Forderung nach mindestens 40 % Gesamtreflexion u.U. nicht mehr einzuhalten ist. Nur durch Anwendung von Stoffen mit extrem hohem Brechungsindex > 2,5 zur Herstellung der λ /2-Schicht ist dieser Nachteil zu umgehen. Solche Stoffe, wie z.B. Zinksulfid, sind allerdings chemisch wenig stabil und können nur mit eher aufwendigen Bedampfungsverfahren aufgetragen werden. Zwar hat der eben beschriebene Spiegeltyp den Vorteil, daß die metallische Schicht z.B. aus chemisch resistentem Chrom bestehen kann, so daß eine rückseitige Schutzbeschichtung nicht notwendig ist, die Nachteile dieses Spiegeltyps sind aber in einem nur sehr schwachen blauen Reflexionsfarbton und der gleichzeitig geringen Gesamtreflexion begründet (DE-PS 3436016 C1).

Beim zweiten Typ befindet sich direkt auf der Substratrückfläche zunächst eine sehr dünne, teilweise lichtdurchlässige metallische Schicht, danach folgt eine dielektrische Schicht mit etwa λ /4-Dicke (λ ca. 750 nm), schließlich folgt wieder eine metallische Schicht, jedoch eher dick und mit > 90 % Gesamtreflexion. Der Brechungsindex der dielektrischen Schicht ist bei diesem Spiegeltyp ohne Bedeutung, da sie lediglich einen bestimmten Abstand zwischen den beiden metallischen Schichten bewirken soll, zwischen denen sich die Interferenzerscheinungen abspielen. Die eben beschriebene metallische Schicht mit hoher Gesamtreflexion besteht entweder aus Silber oder Aluminium, beide Metalle müssen jedoch aufgrund ihrer geringen chemischen Resistenz unbedingt mit Schutzschichten versehen werden. Insbesondere bei Silber reicht ein solcher Schutz aber oft nicht aus, so daß das Metall nach einiger Zeit doch angegriffen wird. Andererseits ist die Verwendung eines hochreflektierenden Metalls beim eben beschriebenen Spiegeltyp zwingend notwendig, da sonst die Gesamtreflexion des Schichtsystems 40 % nicht überschreitet. Während es bei diesem Spiegeltyp also vorteilhafterweise gelingt, einen ausgeprägten blauen Reflexionsfarbton bei ausreichender Gesamtreflexion zu erzielen, so besteht doch ein erheblicher Nachteil in der Verwendung eines hochreflektierenden und gegen chemischen Angriff empfindlichen Metalls wie z.B. Silber (DE - PS 34 36 011 C1).

Beim dritten Typ befindet sich zwischen dem Substrat und einer metallischen Schicht mit 50 bis 80 % Gesamtreflexion ebenfalls ein System aus drei dielektrischen lnterferenzschichten, welche jedoch nur aus Materialien mit hohem sowie niedrigem Brechungsindex bestehen. So befindet sich hier direkt auf der Substratrückfläche eine Schicht mit hohem Brechungsindex und etwa λ /4-Dicke ( λ ca. 470 nm), anschließend folgt eine Schicht mit niedrigem Brechungsindex und etwa λ /4-Dicke und dann folgt wieder eine Schicht mit hohem Brechungsindex, jedoch etwa λ /2-Dicke. Abschließend folgt die bereits erwähnte metallische Schicht. Der Nachteil dieses Schichtsystems liegt in der Wahl von Materialien mit hohem Brechwert für die dem Substrat aufliegende Schicht. Dadurch ist es kaum möglich, einen blauen Reflexionsfarbton und gleichzeitig eine Gesamtreflexion von > 40 % zu erreichen. Außerdem weist ein solches Schichtsystem nicht nur das gewünschte Reflexionsmaximum bei ca. 450 nm auf, sondern besitzt zusätzlich ein sehr ausgeprägtes Reflexionsminimum bei ca. 650 nm, so daß hier die spektrale Reflexion oberhalb 650 nm wieder ansteigt. Ganz allgemein wandern jedoch bei spitzwinkliger Aufsicht auf Interferenzschichtsysteme derartige Reflexionsmaxima und -minima zu kürzeren Wellenlängen, und das bedeutet im Falle dieses Schichtsystems einen unerwünschten Wechsel des Reflexionsfarbtons ins Rötliche (JP-OS 602 127 04).

Der Erfindung liegt die Aufgabe zugrunde, einen Rückblickspiegel für Fahrzeuge, insbesondere Kraftfahrzeuge, zu schaffen, dessen Reflexionsbeschichtung gegen äußere chemische und mechanische Angriffe geschützt ist und der darüber hinaus eine Gesamtreflexion von wenigstens 40 % und einen vom Betrachtungwinkel weitgehend unabhängigen, ausgeprägten blauen Reflexionsfarbton zeigt.

Diese Aufgabe wird durch den in Patentanspruch 1 beschriebenen Rückblickspiegel gelöst.

Bei dem erfindungsgemäßen Rückblickspiegel besteht das zwischen dem transparenten Schichtträger und der metallischen Reflexionsschicht angeordnete lnterferenzschichtsystem aus drei dielektrischen Schichten, von denen die erste, direkt auf dem transparenten Schichträger aufliegende Schicht einen mittleren Brechungsindex, die nachfolgende zweite Schicht einen niedrigen und die darauf folgende dritte Schicht einen hohen Brechungsindex aufweist. Die Dicke der Schichten ist dabei so bemessen, daß der Rückblickspiegel bei Draufsicht auf die Substratseite eine Gesamtreflexion von wenigstens 40 % und einen ausgeprägten blauen Reflexionsfarbton zeigt.

Das oben beschriebene Dreifach-lnterferenzschichtsystem führt im Zusammenwirken mit der metallischen Schicht nicht nur eine Verringerung der Reflexion im langwelligen sichtbaren Spektralbereich herbei, sondern auch eine Erhöhung derselben im kurzwelligen, blauen Bereich. Dies wird vor allem auch durch die Verwendung von Materialien mit mittlerem Brechungsindex für die dem transparenten Schichträger aufliegende erste der drei Interferenzschichten erreicht. Dadurch gelingt es überraschenderweise, einen deutlichen blauen und vom Betrachtungswinkel unabhängigen Reflexionsfarbton sowie eine ausreichende Gesamtreflexion zu erzielen, gleichzeitig aber auf hochreflektierende und gegen chemischen Angriff empfindliche Metalle, wie z.B. Silber, zu verzichten. Insbesondere ermöglicht die Dreifach-lnterferenzschicht den Einsatz einer metallischen Schicht mit nur 50 - 80 % Gesamtreflexion als letzte optisch wirksame Schicht, ohne daß die Gefahr eines Absinkens der Gesamtreflexion auf unter 40 % besteht.

Besonders hohe Reflexionswerte mit einem Reflexionsmaximum im Blauen werden dann erzielt, wenn die dem transparenten Schichtträger benachbarte erste Schicht einen Brechungsindex von 1,6 - 1,85 und eine Schichtdicke von 40 - 80 nm aufweist, die nachfolgende zweite Schicht einen Brechungsindex < 1,5 und eine Schichtdicke von 60 - 120 nm und die darauf folgende dritte Schicht einen Brechungsindex > 1,9 und eine Schichtdicke von 70 - 140 nm aufweist.

Werden die Schichtdicken insgesamt über die oben angegebenen Grenzen hinaus gesenkt bzw. erhöht, so wandert das Reflexionsmaximum im ersten Fall in den kurzwelligen Spektralbereich, der blaue Reflexionsfarbton wird intensiver, womit gleichzeitig ein Absinken der Gesamtreflexion einhergeht, im zweiten Fall wandert das Maximum in den langwelligen Spektralbereich, so daß der Spiegel einen unerwünschten gelben Reflexionsfarbton erhält. Ebenso geht die Interferenzoptische Wirkung bei Änderung von Einzelschichtdicken über die oben angegebenen Grenzen hinaus zurück.

Da für die interferenzoptische Wirkung des Schichtsystems der optische Weg des Lichts, der sich aus dem Produkt von geometrischem Weg und Brechungsindex ergibt, maßgeblich ist, lassen sich ähnliche Überlegungen auch für Abweichungen der Brechungsindizes von den obengenannten Bereichen anstellen.

Besonders bevorzugt ist ein Dreifach-Interferenzschichtsystem, bei welchem die dem transparenten Schichtträger benachbarte erste Schicht einen Brechungsindex von 1,7 und eine Schichtdicke von etwa 60 nm, die nachfolgende zweite Schicht einen Brechungsindex von 1,45 und eine Schichtdicke von etwa 95 nm und die darauf folgende dritte Schicht einen Brechungsindex von 2,05 und eine Schichtdicke von etwa 105 nm aufweist. Mit einem solchen Schichtsystem kann mit einer geeigneten metallischen Spiegelschicht eine Gesamtreflexion von bis zu 50 % erreicht werden, ohne daß der blaue Reflexionsfarbton beeinträchtigt wird. Geringe fertigungsbedingte Abweichungen von den obengenannten Schichtdicken, wie sie insbesondere bei der Beschichtung großer Flächen nicht zu vermeiden sind, führen dabei im allgemeinen noch zu keiner Verschlechterung der Reflexionseigenschaften des erfindungsgemäßen Spiegels.

Dadurch, daß sich die Reflexionsbeschichtung in an sich bekannter Weise auf der Rückseite des Rückblickspiegels befindet, ist sie vor äußeren chemischen und mechanischen Angriffen gut geschützt. Geeignete Metalle für die metallische Spiegelschicht sind insbesondere Chrom, Zink, Zinn oder Nickel oder Legierungen von Aluminium-Kupfer, Nickel-Kupfer, Zinn-Kupfer oder Eisen-Chrom-Nickel. In ausreichender Dicke aufgetragen zeigen Schichten aus diesen Metallen die gewünschte Gesamtreflexion von 50 - 80 %.

Die Dicke der metallischen Schicht ist allgemein so zu bemessen, daß einerseits eine störende Transmission sowie eine zu geringe Reflexion, hervorgerufen durch eine zu geringe Dicke, vermieden wird. Aus diesem Grund ist eine Mindestschichtdicke von 30 nm erforderlich. Andererseits sollte die Beschichtung aber auch kostengünstig sein, so daß die Schichtdicke nicht unnötig gesteigert werden sollte. Bei Verwendung von Chrom für die metallische Schicht, welches insbesondere wegen seiner hohen chemischen Beständigkeit bevorzugt wird, lassen sich bei einer Schichtdicke von etwa 45 nm ein ausgeprägter blauer Reflexionsfarbton sowie eine Gesamtreflexion von 45 bis 50 % erreichen.

Als transparente Schichtträger können neben Silikatglas und anderen Gläsern auch transparente Materialien aus Kunststoff, wie z.B. Polymethylmetacrylate usw., eingesetzt werden. Der Schichtträger kann sowohl plan als auch leicht gewölbt sein.

Für die dielektrischen lnterferenzschichten sind eine Vielzahl von dielektrischen Materialien geeignet, sofern sie nur im sichtbaren Spektralgebiet im wesentlichen absorptionsfrei sind und damit durch sie nicht eine zusätzliche unerwünschte Lichtschwächung hervorgerufen wird. Für hochbrechende Schichten werden z.B. die Oxide des Titan, Cer, Zinn, Zirkonium oder Mischungen dieser Oxide bevorzugt. Für Schichten mit niedrigem Brechungsindex sind z.B. Siliziumdioxid oder das aus der Aufdampftechnik bekannte Magnesiumfluorid sowie andere Fluoride geeignet.

Die Interferenzschichten mit mittlerem Brechungsindex sind bevorzugt Mischschichten aus Metalloxiden mit hohem und mit niedrigem Brechungsindex, z.B. aus TiO₂ und SiO₂, deren Mengenverhältnis so gewählt ist, daß sich der gewünschte mittlere Brechungsindex ergibt.

Verfahren zum Auftragen der Schichten auf den transparenten Schichtträger sind an sich bekannt. Bei dem erfindungsgemäßen Rückblickspiegel wird bevorzugt zunächst das Dreifach-Interferenzschichtsystem im Tauchverfahren aufgetragen, wobei alkoholische Lösungen von organischen Verbindungen der Metalle eingesetzt werden, deren Oxide die Interferenzschichten bilden sollen. Zur Herstellung von Mischschichten aus verschiedenen Metalloxiden werden Gemische der entsprechenden Lösungen verwendet.

Beim Tauchverfahren wird zum Auftragen einer Schicht der mit der entsprechenden Lösung benetzte transparente Schichträger einem Temperprozeß unterzogen, wobei sich auf der benetzten Oberfläche eine dielektrische Schicht aus dem(n) entsprechenden Metalloxid(en) bildet.

Das Tauchverfahren ist für diesen Zweck besonders geeignet, da es eine kostengünstige Beschichtung großflächiger Substrate mit dielektrischen Materialien erlaubt, was mit Hilfe von Vakuumverfahren nicht ohne weiteres möglich ist. Die Verwendung von Vakuumverfahren zum Auftragen der dielektrischen Schichten empfiehlt sich daher in der Regel dann, wenn kleinere Flächen zu beschichten sind. Als Vakuumverfahren kommen insbesondere das direkte Verdampfen oder die Kathodenzerstäubung der entsprechenden dielektrischen Materialien oder aber das reaktive Verdampfen oder die reaktive Kathodenzerstäubung der entsprechenden Metalle in Frage.

Mit dem Tauchverfahren werden bevorzugt dielektrische Schichten aus den Oxiden des Silizium, Titan, Cer, Zinn oder Zirkonium oder Mischungen dieser Oxide abgeschieden.

Die auf das Dreifach-Interferenzschichtsystem folgende metallische Spiegelschicht, beispielsweise aus Chrom, wird bevorzugt mit einem Vakuumverfahren aufgetragen, z.B. mittels Magnetron-Kathodenzerstäubung. Neben dem Aufdampfen können ferner noch andere Abscheideverfahren, z.B. naßchemische Verfahren, verwendet werden.

Zur Verbesserung der Widerstandsfähigkeit gegen chemische und mechanische Angriffe kann es zweckmäßig sein, auf die Rückseite der Reflexionsbeschichtung eine Schutzschicht, z.B. aus einem Lack, aufzubringen.

Nachfolgend wird die Erfindung anhand der Figuren und Ausführungsbeispiele näher erläutert.

### Es zeigen:

- Figur 1: in einer schematischen Längsschnittdarstellung einen erfindungsgemäßen Rückblickspiegel;
- Figur 2: die graphische Darstellung des Reflexionsgrades eines erfindungsgemäßen Rückblickspiegels mit planem und eines mit gewölbtem transparenten Schichtträger;

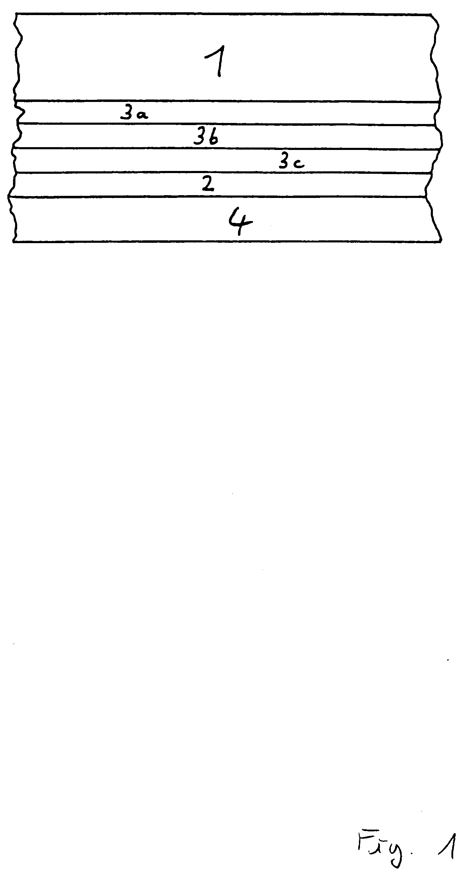

Figur 1 zeigt einen transparenten Schichtträger (1), auf dessen Rückseite sich das Dreifach-Interferenzschichtsystem, bestehend aus einer ersten dielektrischen Schicht mit mittlerem Brechungsindex (3a), einer zweiten dielektrischen Schicht mit niedrigem Brechungsindex (3b) und einer dritten dielektrischen Schicht mit hohem Brechungsindex (3c), befindet. An das dielektrische Schichtsystem (3a-3c) schließt sich eine metallische Reflexionsschicht (2) an, auf welche noch eine Schutzschicht (4) aufgebracht sein kann. Zur besseren Übersicht sind die Abmessungen des Spiegels, insbesondere die Schichtdicken nicht maßstabsgerecht gezeichnet.

Die Herstellung des erfindungsgemäßen Rückblickspiegels kann in der in dem nachfolgenden Beispiel beschriebenen Weise erfolgen.

Auf die Oberfläche eines transparenten Schichtträgers mit planer Oberfläche aus Natronsilikatglas von 2 mm Dicke wurden mit einem an sich bekannten Tauchverfahren unter Verwendung einer SiO₂- bzw. TiO₂-bildenden Tauchlösung und einer Mischung aus beiden Lösungen im Massenverhältnis SiO₂/TiO₂ = O,9 nacheinander eine SiO₂/TiO₂-Mischschicht mit einem Brechungsindex von 1,7 und einer Schichtdicke von etwa 60 nm, eine SiO₂-Schicht mit einem Brechungsindex von 1,45 und einer Schichtdicke von etwa 95 nm und eine TiO₂-Schicht mit einem Brechungsindex von 2,05 und einer Schichtdicke von etwa 105 nm aufgetragen. Auf das Dreifach-Interferenzschichtsystem wurde anschließend mit einem Vakuumverfahren eine etwa 45 nm dicke Chromschicht aufgebracht. Das gleiche Verfahren wurde mit einem transparenten Schichtträger mit gewölbter Oberfläche wiederholt.

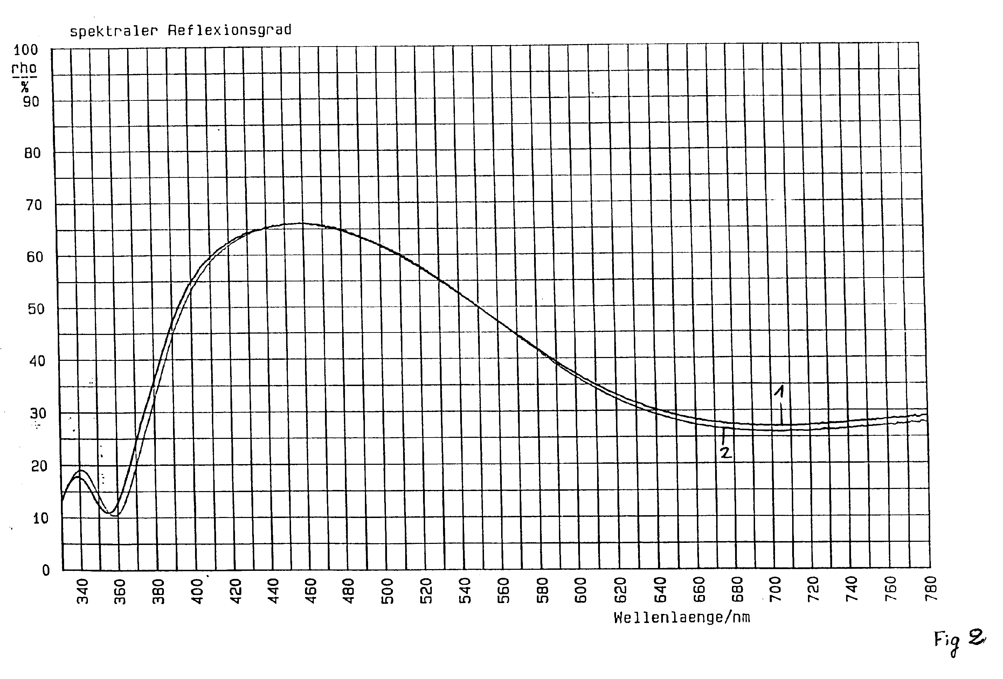

An den beschichteten Scheiben wurde der Verlauf des Reflexionsgrades bei einem Strahleinfall unter einem Winkel von 25° zur Flächennormalen des Reflexionsspiegels im sichtbaren Spektralgebiet von der Glasseite aus gemessen. Den spektralen Verlauf des Reflexionsgrades für den gewölbten und den planen Spiegel zeigen die Kurven 1 bzw. 2 in Figur 2.

Beide Kurven sind weitgehend identisch. Auf ein Maximum bei etwa 460 nm folgt die für blendfreies Sehen erforderliche kontinuierliche Abnahme des Reflexionsgrades vom kurzwelligen zum langwelligen Bereich. Auch das gewünschte Helligkeitsniveau wird erreicht. Beide Spiegel weisen eine Gesamtreflexion von etwa 44 % auf.

## Patentansprüche

1. Rückblickspiegel für Fahrzeuge, insbesondere Kraftfahrzeuge, bestehend aus einem transparenten Schichtträger, vorzugsweise aus Natronsilikatglas und einer rückseitigen Reflexionsbeschichtung, die durch eine metallische Schicht mit 50 - 80 % Gesamtreflexion, gemessen an der Oberfläche gegen Luft, sowie ein Interferenzschichtsystem bestehend aus drei dielektrischen Interferenzschichten mit unterschiedlichen Brechungsindizes gebildet wird, welches sich zwischen dem transparenten Schichträger und der metallischen Schicht befindet,
**dadurch gekennzeichnet,**
daß die erste (3a) der drei dielektrischen Schichten, die direkt auf dem transparenten Schichträger (1) aufliegt, einen mittleren Brechungsindex, die nachfolgende zweite Schicht (3b) einen niedrigen und die darauf folgende dritte Schicht (3c) einen hohen Brechungsindex aufweist, und die Dicken der dielektrischen Schichten so bemessen sind, daß der Rückblickspiegel eine Gesamtreflexion von wenigstens 40 % und einen blauen Reflexionsfarbton zeigt.

2. Rückblickspiegel nach Anspruch 1,
**dadurch gekennzeichnet,**
daß die dem transparenten Schichträger (1) benachbarte erste dielektrische Schicht (3a) einen Brechungsindex von 1,6 bis 1,85 und eine Schichtdicke von 40 bis 80 nm, die nachfolgende zweite dielektrische Schicht (3b) einen Brechungsindex < 1,5 und eine Schichtdicke von 60 bis 120 nm und die darauf folgende dritte dielektrische Schicht (3c) einen Brechungsindex > 1,9 und eine Schichtdicke von 70 bis 140 nm aufweist.

3. Rückblickspiegel nach Anspruch 1 oder 2,
**dadurch gekennzeichnet,**
daß die dem transparenten Schichtträger (1) benachbarte erste Schicht (3a) einen Brechungsindex von 1,7 und eine Schichtdicke von etwa 60 nm aufweist, daß die nachfolgende zweite Schicht (3b) einen Brechungsindex von 1,45 und eine Schichtdicke von etwa 95 nm und die darauf folgende dritte Schicht (3c) einen Brechungsindex von 2,05 und eine Schichtdicke von etwa 105 nm aufweist.

4. Rückblickspiegel nach wenigstens einem der Ansprüche 1 - 3,
**dadurch gekennzeichnet,**
daß die metallische Schicht (2) aus Chrom, Zink, Zinn, Nickel oder aus einer Legierung von Aluminium-Kupfer, Nickel-Kupfer, Zinn-Kupfer oder Eisen-Chrom-Nickel besteht.

5. Rückblickspiegel nach wenigstens einem der Ansprüche 1 - 4,
**dadurch gekennzeichnet,**
daß die metallische Schicht (2) eine Dicke von mindestens 30 nm aufweist.

6. Rückblickspiegel nach wenigstens einem der Ansprüche 1 - 5,
**dadurch gekennzeichnet,**
daß die metallische Schicht (2) aus Chrom besteht und eine Dicke von etwa 45 nm aufweist.

7. Rückblickspiegel nach wenigstens einem der Ansprüche 1 - 6,
**dadurch gekennzeichnet,**
daß die Dreifach - Interferenzschichten (3a-c) im Tauchverfahren aufgetragen sind, unter Verwendung alkoholischer Lösungen von organischen Verbindungen des Silizium, Titan, Cer, Zinn oder Zirkonium oder von Gemischen solcher Lösungen.

8. Rückblickspiegel nach wenigstens einem der Ansprüche 1 - 7,
**dadurch gekennzeichnet,**
daß wenigstens eine der Dreifach-Interferenzschichten (3a-c) mit Hilfe eines Vakuumverfahrens aufgetragen ist.

9. Rückblickspiegel nach wenigstens einem der Ansprüche 1 - 8,
**dadurch gekennzeichnet**,
daß die metallische Schicht (2) mit Hilfe eines Vakuumverfahrens aufgetragen ist.

10. Rückblickspiegel nach einem der Ansprüche 1 - 9,
**dadurch gekennzeichnet,**
daß die metallische Schicht (2) mit einer Schutzschicht (4) versehen ist.

## Claims

1. Rear view mirror for vehicles, in particular motor vehicles, comprising a transparent base, preferably of soda silicate glass and a rear-side reflection coating which is formed by a metal layer having 50-80% total reflection, measured at the surface open to air, and an interference layer system comprising three dielectric interference layers of different refractive indices, between the transparent base and the metal layer, characterized in that the first (3a) of the three dielectric layers, which lies directly on the transparent base (1), has a medium refractive index, the subsequent second layer (3b) has a low refractive index and the successive third layer (3c) has a high refractive index, and the thicknesses of the dielectric layers are dimensioned such that the rear view mirror has a total reflection of at least 40% and a blue reflection hue.

2. Rear view mirror according to Claim 1, characterized in that the first dielectric layer (3a), adjacent to the transparent base (1), has a refractive index of 1.6 to 1.85 and a layer thickness of 40 to 80 nm, the subsequent second dielectric layer (3b) has a refractive index < 1.5 and a layer thickness of 60 to 120 nm and the successive third dielectric layer (3c) has a refractive index > 1.9 and a layer thickness of 70 to 140 nm.

3. Rear view mirror according to Claim 1 or 2, characterized in that the first layer (3a), adjacent to the transparent base (1), has a refractive index of 1.7 and a layer thickness of approximately 60 nm, in that the subsequent second layer (3b) has a refractive index of 1.45 and a layer thickness of approximately 95 nm and the successive third layer (3c) has a refractive index of 2.05 and a layer thickness of approximately 105 nm.

4. Rear view mirror according to at least one of Claims 1-3, characterized in that the metal layer (2) is of chromium, zinc, tin, nickel or an alloy of aluminium/copper, nickel/copper, tin/copper or iron/chromium/nickel.

5. Rear view mirror according to at least one of Claims 1-4, characterized in that the metal layer (2) has a thickness of at least 30 nm.

6. Rear view mirror according to at least one of Claims 1-5, characterized in that the metal layer (2) is of chromium and has a thickness of approximately 45 nm.

7. Rear view mirror according to at least one of Claims 1-6, characterized in that the triple interference layers (3a-c) are applied by the dipping process, using alcoholic solutions of organic compounds of silicon, titanium, cerium, tin or zirconium or mixtures of such solutions.

8. Rear view mirror according to at least one of Claims 1-7, characterized in that at least one of the triple interference layers (3a-c) is applied with the aid of a vacuum process.

9. Rear view mirror according to at least one of Claims 1-8, characterized in that the metal layer (2) is applied with the aid of a vacuum process.

10. Rear view mirror according to one of Claims 1-9, characterized in that the metal layer (2) is provided with a protective layer (4).

## Revendications

1. Rétroviseur pour véhicules, en particulier pour véhicules automobiles, comprenant un substrat transparent, de préférence en verre silico-sodique, portant un revêtement réfléchissant sur la face arrière, ce revêtement étant formé d'une couche métallique présentant une réflexion globale de 50 à 80 %, mesurée à l'interface avec l'air, ainsi que d'un système de couches d'interférence qui se compose de trois couches interférence diélectriques ayant des indices de réfraction différents et qui se trouve entre le substrat transparent et la couche métallique, **caractérisé** par le fait que la première (3a) des trois couches diélectriques, qui est directement appliquée sur le substrat transparent (1), présente un indice de réfraction moyen, la deuxième (3b) faisant suite à la première un indice de réfraction faible et la troisième (3c) faisant suite à la deuxième un indice de réfraction élevé, et les épaisseurs des trois couches sont choisies de manière que le rétroviseur présente une réflexion globale d'au moins 40 % et une nuance de lumière réfléchie bleue.

2. Rétroviseur suivant la revendication 1, **caractérisé** par le fait que la première couche diélectrique (3a) voisine du substrat transparent (1) présente un indice de réfraction de 1,6 à 1,85 et une épaisseur de couche de 40 à 80 nm, la deuxième couche diélectrique (3b) faisant suite à la première un indice de réfraction < 1,5 et une épaisseur de couche de 60 à 120 nm et la troisième couche diélectrique (3c) faisant suite à la deuxième un indice de réfraction > 1,9 et une épaisseur de couche de 70 à 140 nm.

3. Rétroviseur suivant la revendication 1 ou 2, **caractérisé** par le fait que la première couche (3a) voisine du substrat transparent (1) présente un indice de réfraction de 1,7 et une épaisseur de couche d'environ 60 nm, la deuxième couche (3b) faisant suite à la première un indice de réfraction de 1,45 et une épaisseur de couche d'environ 95 nm et la troisième couche (3c) faisant suite à la deuxième un indice de réfraction de 2,05 et une épaisseur de couche d'environ 105 nm.

4. Rétroviseur suivant au moins l'une des revendications 1 à 3, **caractérisé** par le fait que la couche métallique (2) est constituée de chrome, zinc, étain, nickel ou d'un alliage aluminium-cuivre, nickel-cuivre, étain-cuivre ou fer-chrome-nickel.

5. Rétroviseur suivant au moins l'une des revendications 1 à 4, **caractérisé** par le fait que la couche métallique (2) présente une épaisseur d'au moins 30 nm.

6. Rétroviseur suivant au moins l'une des revendications 1 à 5, **caractérisé** par le fait que la couche métallique (2) est constituée de chrome et présente une épaisseur d'environ 45 nm.

7. Rétroviseur suivant au moins l'une des revendications 1 à 6, **caractérisé** par le fait que les couches d'interférence triples (3a-c) sont appliquées par immersion, avec utilisation de solutions alcooliques de composés organiques de silicium, titane, cérium, étain ou zirconium, ou de mélanges de telles solutions.

8. Rétroviseur suivant au moins l'une des revendications 1 à 7, **caractérisé** par le fait qu'au moins l'une des trois couches d'interférence triples (3a-c) est appliquée par un procédé sous vide.

9. Rétroviseur suivant au moins l'une des revendications 1 à 8, **caractérisé** par le fait que la couche métallique (2) est appliquée par un procédé sous vide.

10. Rétroviseur suivant l'une des revendications 1 à 9, **caractérisé** par le fait que la couche métallique (2) est munie d'une couche de protection (4).
